(19) Europäisches Patentamt
European Patent Office
Office européen des brevets

(11) **EP 2 190 729 B1**

(12) **EUROPEAN PATENT SPECIFICATION**

(45) Date of publication and mention
of the grant of the patent:
**01.05.2013 Bulletin 2013/18**

(21) Application number: **07802962.6**

(22) Date of filing: **28.08.2007**

(51) Int Cl.:
***B63B 1/06*** *(2006.01)* ***B63B 1/40*** *(2006.01)*
***B63B 9/00*** *(2006.01)*

(86) International application number:
**PCT/EP2007/058945**

(87) International publication number:
**WO 2009/026958 (05.03.2009 Gazette 2009/10)**

(54) **HULL FOR SAILBOAT**

RUMPF FÜR EIN SEGELBOOT

COQUE POUR BATEAU A VOILE

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**02.06.2010 Bulletin 2010/22**

(73) Proprietor: **Speed 4 Sail S.A.**
**1420 Braine-l'Alleud (BE)**

(72) Inventor: **DE TROZ, Vincent**
**58052-030 João Pessoa (BR)**

(74) Representative: **Watterson, Peer Marten John et al**
**Marks & Clerk (Luxembourg) LLP**
**44 rue de la Vallée**
**B.P. 1775**
**1017 Luxembourg (LU)**

(56) References cited:
**EP-A- 1 457 416     DE-A1- 3 539 081
DE-A1- 19 538 520     JP-A- 2002 356 193
US-A- 3 064 611     US-A- 5 191 848
US-A1- 2006 243 182     US-B1- 6 647 909**

• **KEUNING ET AL: "THE EFFECT OF BOWSHAPE
ON THE SEAKEEPEING PERFORMANCE OF A
FAST MONOHULL" THE INTERNATIONAL
CONFERENCE ON FAST SEA
TRANSPORTATION, ROYAL INSTITUTION OF
NAVAL ARCHITECTS, LONDON, GB, vol. 212, 4
September 2001 (2001-09-04), pages 197-212,
XP008073025**

**Description**

FIELD OF THE INVENTION

This invention relates to ballasted sailboats. More specifically, the invention relates to sailboats having a hull whose quickwork form (the part of the hull immersed below the waterline also being called "bottom" or "wet area" or "under work") is configured to drastically reduce the generation of waves.
Document DE 195 38 520 constitutes the closest prior art.

BACKGROUND

Hull ship resistance was already studied and broken down in order to better understand fluidity mechanics. Taniguchi (in: Taniguchi Tamura, "On a new method of correction for wind resistance relative to the analysis of speed trial results", Proceedings of 11th ITTC, 1966) proposes various ways of breaking down the resistance of a hull. The well-known Froude hypothesis (William Froude: "The Papers of William Froude 1810-1879") is an approximation that can be supplemented by other concepts which are sometimes difficult to take into account in an experimental approach. Resistance against a craft's or ship's motion, whatever its speed, dimension and type, depends primarily on two main phenomena:

   a) the friction of water against the bottom surface (called drag resistance, or also friction resistance or viscous resistance);

   b) the generation of surface waves due to the craft passage over the water (wave resistance).

A water craft moving through the water surface generates a transverse wave system having a velocity ($C_k$) equal to the boat's speed ($V_k$). These self-generated waves represent an irrecoverable dissipation of propulsive energy that is a consequence of the "wave-making" resistance of the hull. Regarding the total hull ship resistance, in addition to the two principal factors mentioned above, other minor factors also have to be taken into account, these being: air resistance, form resistance, resistance produced by the appendages, resistance from a dirty hull bottom, and resistance in rough sea. Wave resistance and form resistance are also commonly referred to as residual resistance.
Waves are the visible sign of wasted energy resulting from movements of water near the surface of the sea. Velocity of idealized travelling waves in depths water depends on the wavelength. The greater the wavelength, the faster is the wave. Interestingly enough, the Speed/Length Ratio (*SLR*) of every wave is constant and equals 1.34 regardless of its length ($L_w$). At the same time, when the ship's speed increases, the length of the transverse wave system it has generated increases and it is remarkable that

$$C_k = V_k \,.$$

When the wavelength $L_w$ becomes equal to the load water line length $L_{WL}$

$$L_w = L_{WL},$$

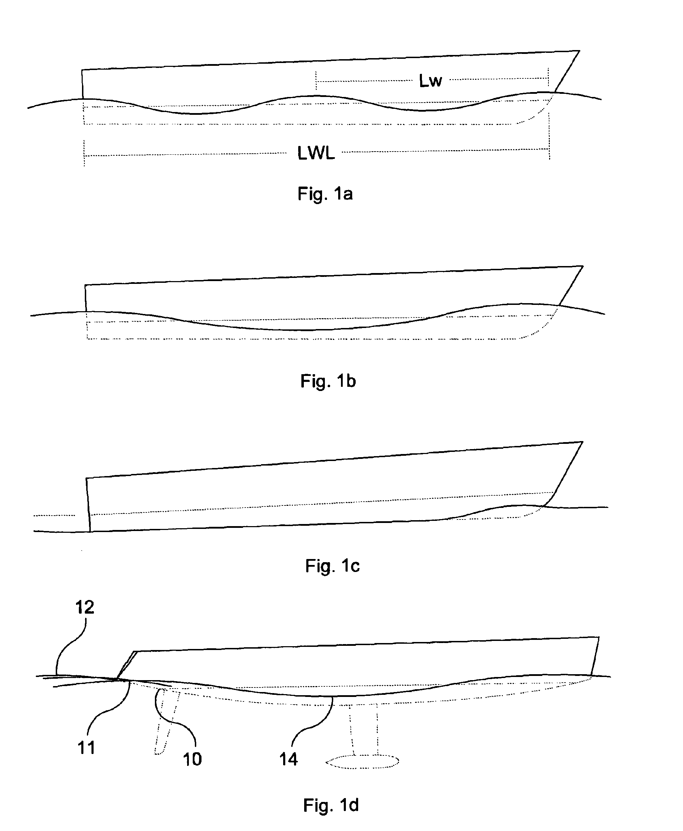

the ship enters a critical situation because the hull is literally travelling in the hollow of its self-generated wave system. This is happening at what is called 'the critical speed'. The critical speed is not at all significant for large vessels, since they are running at a speed that is a fraction of their own wave length (see Fig. 1a) ($L_{WL} \gg L_w$). The critical speed is more significant for smaller watercraft like sailboats, yachts, tugboats or other small military or fishing boats, because this physical limitation is reached rapidly and prevents a water displacing hull from running faster than the wave it generates (as shown in Fig. 1b). It follows that the critical speed of any hull can be forecast by the wave speed formula summarized here:

$$C_k = \sqrt{\frac{9.81 \cdot L_w}{2\pi}}$$

where $C_k$ is the celerity in m/s and $L_w$ the wave length in meters. Alternatively this may be represented as:

$$V_k = 1.34\sqrt{L_{WL}}$$

where $V_k$ is expressed in knots and $L_{WL}$ in feet.

Planing boats can run at SLR > 1.34, at which moment the wavelength $L_w$ is larger than the ship's water line length $L_{WL}$ and where they benefit from pure gliding effects (as shown in Fig 1c). A summary is given in Table 1:

**Table 1: Comparison of wave-making characteristics for various wavelength to water line length ratios.**

| Lw / LWL = SLR² / 1,8 or SLR = v 1,8 Lw / LWL | | | |
|---|---|---|---|
| **Lw / LWL** | | **SLR** | |
| **0,5** | fig 1a | **0,95** | Cruise Speed of Displacement Hulls |
| **1** | fig 1b | **1,34** | Critical Speed |
| **2** | | **1,90** | |
| **3** | | **2,32** | |
| **5** | fig 1c | **3,00** | Pure Gliding Effects |

From speed zero to about SLR = 1, the drag resistance is practically the only force acting against the ship's motion. The wave resistance begins to act weakly from SLR = 1 (i.e. $L_w$ / $L_{WL}$ = 0.6) and grows significantly when the speed approaches and surpasses the critical speed. Both resistances act against the thrust of the driving force and the exponential nature of the wave resistance becomes the most important part of the impediment to move forward, literally acting like a brake.

The shapes that a hull bottom can take are essentially two: round or chine. The round bottom has a round bilge form and is traditionally used for displacement and semi-displacement hulls. The chine bottom is used for planing boats for their gliding effects at high speeds (3.0 < SLR). There not being any limits between these extreme forms, some crafts have hulls which, adapted to their weight, length and speed, fall halfway between a displacing and a gliding bottom. This compromise is defined as semi-planing or semi-displacing bottom, and can also be called 'deep-V'. Planing and semi-planing craft hulls are over-powered to allow them to overcome the problem of their stem wave (the ship's nose has to climb over the back of the stem wave). Commonly, once these hulls reach their planing phase, power can be reduced. It is notable that all types of bottom are constantly making a lot of waves at low and medium speeds, which is prejudicial to a good and economical operation.

Typically high speeds are unattainable for displacement hulls like ballasted sailboats. For sailboats running close to SLR = 1.34, doubling the power would bring only about 15% more speed. Some race sailboats can sometimes arrive at overcoming that speed limit under appropriate weather conditions and thanks to a strong lightening and also a fascinating rigging. As explained below, the aft shapes can also modify the level of the critical speed. Nevertheless, when a sailboat is running at its critical speed, we can observe that all the ship is pushed down in the hollow of its own wave, the waterline being abnormally immersed, resulting in a real confinement of the ship itself in a big fence of water.

Before going further, we will summarise the Coanda effect. It describes the tendency of a stream of fluid to stay attached to a convex surface, rather than follow a straight line in its original direction. In order to better understand what is happening when a hull possessing a form like a sailboat is in motion, we will make a little demonstration. If one holds the back of a spoon close to (but not touching) a stream of water running freely out of a tap (a faucet), the stream of water will deflect from the vertical in order to run over the back of the spoon. Suspending the spoon freely, we feel it strongly drawn into the water stream, as if the water were a magnet. It surprises many people to see how instantly the spoon is drawn into the stream rather than be repelled by it.

Now, imagining all the scene on the horizontal position, the spoon representing the hull tending moving fast on the sea surface, we better understand what some curved lines on a hull bottom can implicate. From Newton's first law, it is known that for the fluid to roll over the hull (or spoon) surface it must have a force which acts on it. From Newton's third law, it follows that the fluid must exert an equal and opposite force on the object which causes the deviation of the fluid. Thus negative pressures are generated on these convex surfaces and explain why a conventional sailboat hull is strongly braked and pushed down when its speed is increasing, this deterioration caused by the initial problem of the wave. Even if that cannot be seen with the naked eye on larger ships like vessels, the phenomenon remains the same and the demonstration remains valid for all hulls having a raked bottom going up to the stern and/or a closing aft part. Depending on the angles of the aft part, the water running along the hull walls and bottom generates not only a strong force pushing the hull down but also side components force and especially an undesired resultant backwards force which acts like an enormous brake.

US20020979595, US2005022713 (both in the name of REYNOLDS ZACHARY), and other related documents describe in detail the necessity to diminish the wave making and the advantages such research could bring about for the field of navigation.

Summarising these considerations, in order to enable a sailboat go faster than the critical speed, the propulsion power must overcome a hydrodynamic resistance that can be summarized by

A) the drag resistance which is roughly proportional at the wet area (the area of the quickwork),

B) the resistance of a self-generated transverse wave system.

The latter one can further be broken down in two generative topics:

B1) front waves that find their origin in the massive water dislocation provoked by the bow and by the fore walls,

B2) stem waves system which finds its origin in a harmonic phenomenon composed by

B2.1) as principal oscillation the Coanda effect,

B2.2) as second oscillation the second crest of the front wave, which is at SLR = 1.34 accorded in frequency with the boat waterline length (LWL), and

B2.3) by suction effects provoked by the appendages (tailpieces) as secondary oscillations acting like overtones.

Notice about counter stem and skirt shapes: due to the slanted aft forms (Fig. 1d), $L_{WL}$ is artificially increased with growing speed. The critical speed is then increased. Therefore, at this time the second node of the front wave 11 is no longer just on the end of the calculated $L_{WL}$ 10 at speed zero but more aft, when the first wave node produced by the Coanda effect 12 is just astern of the poop at short distance, thus a little bit further behind. This fact explains how almost the majority of the modern sailboats succeed to run a little bit faster than the calculated critical speed: the actual wave antinode 14 can form temporarily a new calculated SLR that can reach ≈ 1.67. This means the peak speed can be increase by up to 25% depending on the aft shapes.

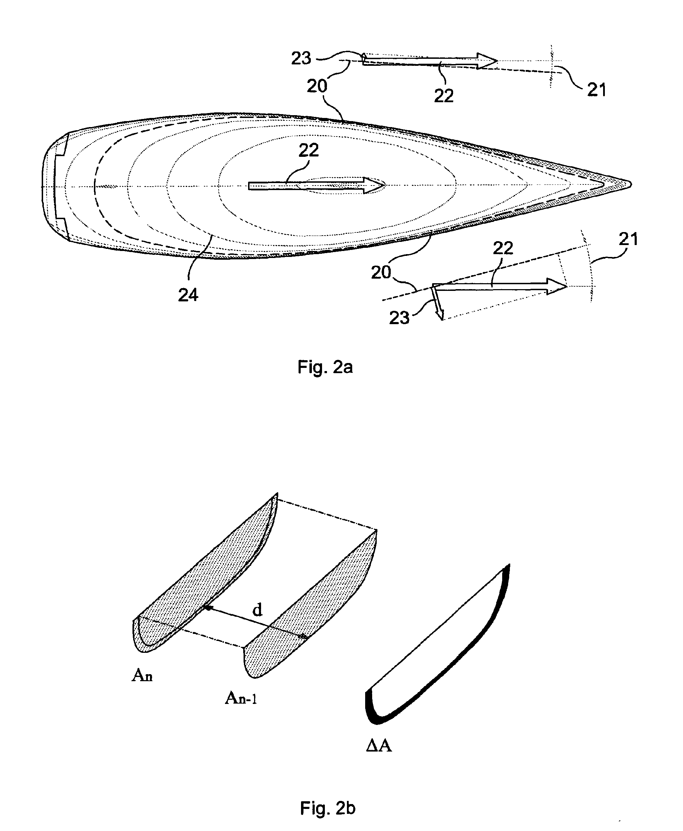

To move forward, a boat must obviously move, shift, spread out, or displace water. It is to be noted that for a body mobile in water there are two ways to displace water: a first way where the delocalization of the water molecules is made only by fluidity, i.e. the delocalization of the liquid is made at low energy cost. In such delocalization, the inertia induced to the water is kept at a low level and there is no production of wave, just some backwashes and whirls can be observed. For example, displacing slowly the hand perpendicularly to the surface of the bathtub make water displacing by fluidity as in a communicating vases system. In a second way the quantity of the water displaced abruptly at the same time is so high that the dislocation by fluidity is no longer enough. Here the energy transmitted to the water molecules exceeds the fluidity threshold, there are great inertia induced to the mass of water forced in motion and, thus leads to the production of waves. Such water displacement can be compared with a deflagration or an explosion in the air. The direction taken by each molecule of water put in such motion simply doesn't matter, knowing that the resultant of the forces 23 is directed, in a rough approach, perpendicular from the surface which generates this displacement 20, namely the hull. From a very concrete point of view, we can say that by decreasing the penetration angle of the hull in water, we could influence the result positively, i.e. we could decrease the delocalization speed of the water to put in motion, while increasing the hull speed itself. As shown in Fig 2a, the penetration angle 21, the boat speed 22 and the evacuated water speed 23 are closely interrelated and, at the extreme, a tangent angle would release a null lateral ejection speed. But to design a hull which would be only dressed with a fine angle of wall would impede to have sufficient volumes or would increase their length intolerably or jeopardize the lateral stability by issuing on a too narrow hull.

It is therefore an object of the invention to create hulls which will be faster, in particular for sailboats for which the weight cannot be easily decreased (intrinsic weight, ballast, payload and comfort oblige) or more economic to use for motor boats and yachts.

## SUMMARY OF THE INVENTION

In accordance with the present invention as defined by independent claim 1, there is provided a hull for a ballasted sailboat. The hull comprises fore sections having a fine shape allowing to delocalize water when travelling through it substantially by fluidity, thereby reducing wave-making based on calm water considerations.

The fine shape may be characterized by an areas curve ($\Sigma$A), corresponding to half of the cross section of the hull below the waterline. The absolute value of the change of the gradient $\Delta A/d$ of the areas curve over a predetermined length of the horizontal distance between perpendiculars taken at the forward-most (FP) and aft-most (AP) points on the waterline may correspond substantially to:

$$\left|\frac{\Delta A}{d}\right| \le 0.126\,\text{m}\,.$$

In a second configuration of the above aspect, the absolute value of the gradient $\Delta A/d$ of the areas curve may correspond substantially to:

$$\left|\frac{\Delta A}{d}\right| \le 0.115\,\text{m}\,.$$

In another configuration the predetermined length may be at least two-thirds of the horizontal distance between perpendiculars taken at the forward-most (FP) and aft-most (AP) points on the waterline.

In a further configuration the predetermined length may be substantially the horizontal distance between perpendiculars taken at the forward-most (FP) and aft-most (AP) points on the waterline.

In another configuration of the above aspect the volume of appendages like keel or rudder may be not taken in account in the calculation of the areas curve ($\Sigma$A).

In a configuration of the above aspect, the areas curve ($\Sigma$A) may be that of a three-dimensional convex hull circumscribing the hull.

In a further configuration of the above aspect, the areas curve ($\Sigma$A) may be that obtained by the assumption that the stern sections shapes were filled.

In another configuration of the above aspect the hull may comprise lines acting as skirts in the real shapes.

According to a second aspect of the present invention, a ballasted sailboat comprises a hull according to any one of the configurations of the first aspect.

According to a third aspect of the present invention, a habitable sailboat comprises at least one hull according to any one of the preceding aspects.

In a first configuration of the third aspect, the sailboat may be not a typically ballasted sailboat.

In a second configuration of the third aspect, the sailboat may be a trimaran.

In a third configuration of the third aspect, the sailboat may be a catamaran.

The present invention brings about various benefits like allowing to reach a range of previously unattainable speeds for ballasted sailboats, enhancing the performance of habitable multi-hull boats, or, when sailing with the engine, economizing fuel at speed close to the wave speed when compared with any other hull. A particular advantage of the hulls as proposed in the present invention may be the reduction or virtual lack of front wave, lateral wave and stem wave, in particular when sailing on calm water. Applying the concept described herein, boats may achieve natural planing effects with increasing speed.

## BRIEF DESCRIPTION OF THE DRAWINGS

Fig. 1a shows the wavelength compared to the waterline length of a hull at low speed.

Fig. 1b illustrates the wavelength compared to the waterline length of a hull at unit speed to length ratio (SLR = 1.34).

Fig. 1c depicts the wavelength and wave form of planing boats at SLR > 1.34, for which the wavelength $L_W$ is larger than the ship's water line length $L_{WL}$ and where they benefit from pure gliding effects.

Fig. 1d shows the wavelength compared to the waterline length of a conventional sailboat hull at unit speed to length ratio SLR = 1.34.

Fig. 2a depicts a conventional sailboat hull form and the interrelation between the penetration angle, the boat speed and the evacuated water speed.

Fig. 2b shows the areas of two immersed hull sections.

Fig. 2c illustrates the areas curve method.

Fig. 3a shows an areas curve of a conventional sailboat hull.

Fig. 3b shows an areas curve of a hull in accordance with the present invention.

Fig. 3c shows an areas curve of a further hull in accordance with the present invention.

Fig. 3d shows an areas curve of a typical semi-planing watercraft hull with a "deep V" entrance

Fig. 4 shows waterlines of a preferred hull in accordance with the present invention.

Fig. 5 summarises the towing resistance curves for different hull shapes.

DETAILED DESCRIPTION

According to the present invention critical speed of a hull can be overcome by increasing the sharpness of penetration in water maintaining a water side delocalization at a very low level speed, below the fluidity threshold to avoid the making of waves at the fore sections. This can further be optimised by carefully selecting the forms generating the stern wave system in the aft sections.

In order to determine which are the limits allowing a sailing hull to displace the water by fluidity (i.e. without wave making in its fore part), the following terms and method will be used.

The length between perpendiculars (LBP) represents the horizontal distance measured between perpendiculars taken at the forward-most (FP) and after-most (AP) points on the waterline corresponding to the normal operating draft, with the hull not heeled. Here, FP is the forward perpendicular and AP the aft perpendicular.

In the method, the distance between perpendiculars (LBP) will be divided into a convenient number of equal spaces to give a number of evenly spaced sections. The number of sections will preferably be about twenty in order to have a good control of the water side-delocalisation. However, some more complicated analysis, or big yachts, may require more detailed issue and the number of sections may have to be increased.

The part of the volume situated below the waterline and between two adjacent sections will named hereafter $V_n$ section. The sum of all $V_n$ sections is giving the displacement of the hull/ship. Mention is done that the volume of the appendages like keel or rudder are not to be taken in account in the $V_n$ sections calculation.

From FP (the forward perpendicular) to the $A_x$ section (the greatest immersed cross section of the hull), each $V_n$ section is opening a part of the water. Regarding all along the hull, and from the FP point to the $A_x$ section, each $V_n$ section will dislocate a little bit more water than its previous, so we can write $V_{n-1} < V_n$. Coming at the $V_x$ section (the $V_n$ section corresponding to /including the $A_x$ section, thus having the largest volume) all the water to be opened will be get in move. If the $A_x$ section is not situated at the most rear section, the $V_x$ section will be followed by other decreasing $V_n$ sections to the last aft $V_n$ section ($V_{n-1} > V_n$), or staying equals if the sections are remaining constant. From this description, it follows that each section can be quantized in relation to its bordering. It follows that:

$$V_n - V_{n-1} = \Delta V$$

with $\Delta V$ (the volume of water put in motion by each $V_n$ section) having a positive, nil or negative value.

Since we know that the volume displaced, dislocated by the hull in motion, depends directly on the $A_x$ section, we can construct the same relation with the areas of each section, and a fortiori we can construct also the same relation with the half areas of each section:

$$A_n - A_{n-1} = \Delta A$$

with $\Delta A$ (the half-area difference between two bordering sections) having a positive, nil or negative value (Fig. 2b).

As highlighted by various tests made with models, the water is kept in fluid displacement if the gradient $\Delta A/d$ does not exceed the value given by the rule:

$$\left|\frac{\Delta A}{d}\right| \leq 0.126\,\mathrm{m}$$

Where $d$ is the distance between the sections.

For even better results, it is preferred that the hull observes the rule:

$$\left|\frac{\Delta A}{d}\right| \leq 0.115\,\mathrm{m}$$

In order to visualize the implementation of the lines of the hull, the naval architect has to draw the 'areas curve' (also occasionally called the displacement curve) which will become the best graphical indicator of laterally moved volumes of water. This curve makes it possible to visualize in a diagram the volumes distribution along the hull. The surface located under the curve represents the immersed volume of the hull.

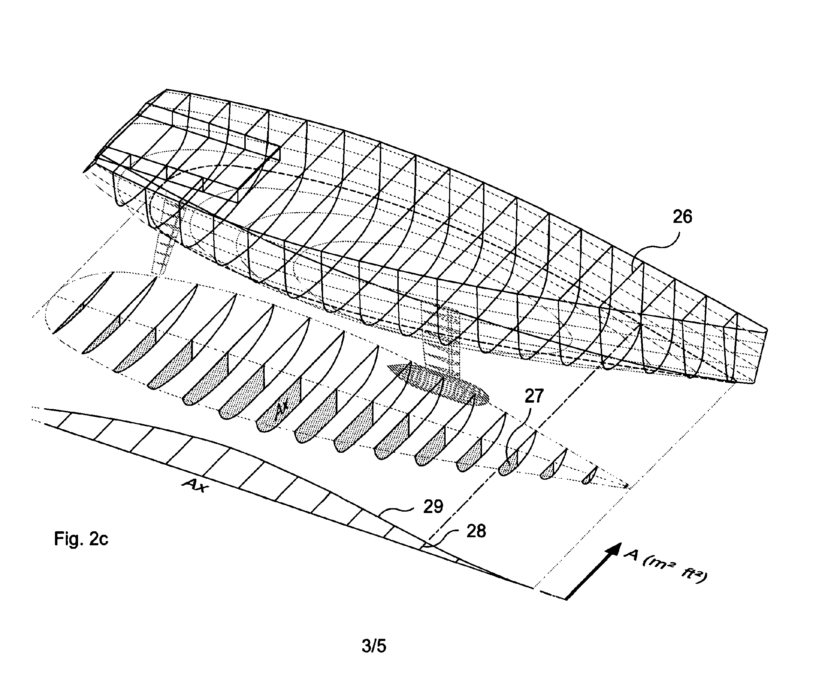

Referring now to Fig. 2c, the method is applied as follows: the hull is divided into various sections 26 at regular intervals in its lengthwise direction. At each section we measure the area (surface) of the half immersed cross-sectional section 27. In the diagram, we set each section at regular intervals in X-coordinate and we record in the Y-ordinate the linear value 28 of the half immersed area measured on the corresponding section. By connecting the ends of the 'area vectors' between them, the form 29 that we can call $\Sigma A$ illustrates the displacement (the volume) of the half quickwork. In the case of several surfaces at the same section, the area vector is the sum of the surfaces included in this section.

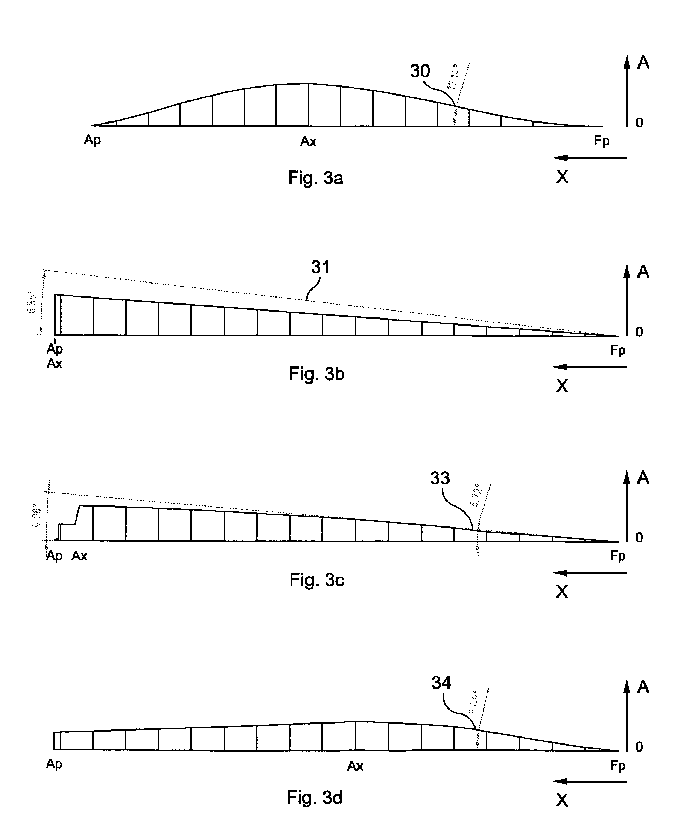

Fig. 3a shows the areas curve of a classic sailboat hull form, and more particularly the hull illustrated in Fig. 1d and Fig. 2. It shows manifestly the position of the greater section "$A_x$", which is located obviously at a different place than the position of the wider section (BWL, beam at water line), or at an other place than the deeper point of the hull body or of the deeper point of the appendages (keel). Note that the appendages like keel or rudder are rarely taken in account in an areas curve.

As we seen in the foregoing, subtracting the surface of each subsection of the areas curve by its previous bordering, allows to obtain the volume of water put in movement by each section itself for the half-hull, and likewise the direction of its displacement (moving aside or bringing back).

In terms of water delocalisation, the ideal distribution would result in a hull having its areas curve in a straight line, from the FP point (the forward perpendicular) and ending at the last aft section AP (aft perpendicular), as depicted in Fig. 3b. Without prejudice to the real shapes of the hull itself, by observing this, the naval architect keeps some degree of freedom in the choice of the forms which can be simple or complex, and for which each contour line (waterline, sectional or buttock) can be concave, straight or convex.

Still referring to Fig. 3b, to visualize the boundary slope of the displacement by fluidity, we can trace a line 31 from FP giving a slope that corresponds to:

$$A_{AP} = 0.115\,\mathrm{m} \cdot L_{BP}$$

Where $A_{AP}$ would be the half area value of an imaginary section at the AP point (the aft perpendicular) and $L_{BP}$ being, as seen above, the distance between perpendiculars, also called the $L_{WL}$ (the waterline length).

In order to maintain a delocalisation by fluidity, the outline of any areas curve must not overstep this boundary slope and if the areas curve was drawn curved like those illustrated in Figs. 3a, 3c or 3d, any part of these curves should not have a slope greater than the boundary slope line 31 itself. This last criterion can be controlled graphically on any point of the areas curve by using any design tool like the well-known parallel lines method.

Since all the areas curves of the Figs. 3a, 3b, 3c, 3d were drawn having the same surface (square measure) and drawn at the same scales, we can compare them for the only purpose of the discussion of the maximum angles formed by some points of these curves. It is to be noted that the hulls of the Fig 3a and Fig 3d have angles greater than the one of the line 31, which means that these hulls are meeting wave making characteristics at least in their fore parts.

Furthermore, the areas curves of Figs. 3a, 3b, 3c and 3d having the same square measure, all hulls resulting from them will have the same tonnage. But it must be noted that each one of them has values of $A_x$ section that are different, therefore, as it will be explained further, each one will put in movement different quantities of water, exactly in proportion of their respective $A_x$ section areas. This will occur independently of the shapes of each one of these hulls.

The naval architect can decide to arc slightly the areas curve as shown in Fig. 3c, in order to obtain more body (of volume) in the central sections of the quickwork, that moving beneficially the centre of buoyancy a little bit forward and reducing a little bit more the $A_x$ section. Thereby he can control that the curve slope not to be steeper by refreshing the calculation of the local $\Delta A$ by means of the rules given here above in order to maintain at each point of the hull the displacement of the water by fluidity.

The coefficient value of the gradient $\Delta A/d$ = 0.115 m in my formula is, as highlighted by my works, the maximum for optimal water displacement by fluidity. Increasing this value would cause a more significant angle or slope of the areas curve, that would cause a water side-displacement more brusque, in a deflagration way, and thus cause the appearance of waves.

If complex volumes are implemented, it may be difficult to have an areas curve perfectly straight or convex in any point. With reference to Fig. 3c, it is sufficient to ensure that the localised angle 33 of the curve does not induce a gradient $\Delta A/d$ exceeding a local value, controlled by means of the formula, but permitting to change in a locally delimited manner the coefficient value of 0.115 m to 0.126 m. At this angle or gradient a beginning of formation of a water cushion was noted. It is thus possible to create a great number of different forms on a same and only one areas curve (that of the Fig. 3c for instance), all having the same characteristic of not producing waves.

According to the adopted forms and lines in the real shapes, the capacities of righting, speed, planing will be more or less developed and justified by the provided use program. Although it is not recommended, the areas curve can decrease after having passed the greater $A_x$ section, as far as the partially decreasing slope does not exceed a temporarily coefficient value of 0.126 m in my formula. Whatever the configuration, all waterlines must end in a sharp angle in order to cut the water streams and thus avoid the undesired consequences of the Coanda effect. It must be understood, and particularly in its eventually decreasing slope, that the areas curve is referring to filled shapes. In other words, all "cut-out" or all hollow shapes produced by any staged or oblique transom parts or by any skirts producing a decreasing slope exceeding a temporarily coefficient value of 0.126 m in my formula or giving gaps in the curve are not to be taken into account in the method, seeing that the water streams are leaving the hull from these forms. The parameters of this method are applicable as well to monohulls, such as habitable multihulls, powered by sails or by engine. In Figs. 3a and 3d, 30 and 34 denote the localised angles and their values of the others curves having 'wave making' characteristics.

One can imagine that for the needs of a technical reason like the root of the anti-leeway plans or the keel base or for the needs of the motorization, diving hatch or more generally some inside or outside accommodation that it could be constructed in the real shapes a base giving some hollow or boss or protrusion or any quick-form enlargement or decrease, that would have as consequence a more or less punctual angle in the areas curve. Obviously, without prejudice to the pertinence of these relatively to the performances, it may be tolerable that the areas curve can have some disruption (for up to a third of the distance $L_{BP}$) deviating from the herein described rules with no damage for the full method.

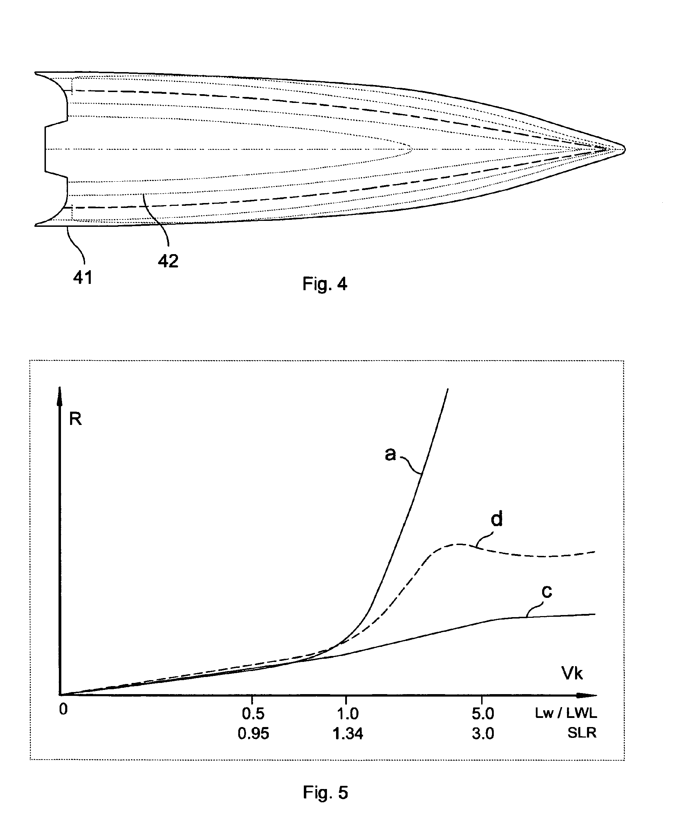

Fig. 4 shows a preferred form for a sailboat, being built with the $A_x$ section 41 almost at the transom. Making the hull by this way will prevent any braking by the Coanda effect on the rear shapes. 42 denotes waterlines that are open on the transom, way by which the water streams are cut out to avoid said braking effect or the generation of the stem waves system, contrary to the waterlines of any classical ballasted sailboat that are generally closed in loop 24. The heeled ship is sailing on a slightly different axis (lubber line) that when she is sailing about 0° of heel by fair wind or by engine, which is not prejudicial to the correct operation nor with use, any helmsman of sailboat being accustomed to such behaviour. The areas curve shown in Fig. 3c could be the areas curve of this hull, then without the localised angle 33 that is indicated in the drawing just for the necessity of the example. The gap observable in the aft sections of the areas curve depicted in Fig. 3c is due to the transom configuration which is divided on several sections for the only needs of the accommodations and motorization. The aft position of the centre of buoyancy is balanced by an inside ballast. When speed is rising, the hull begins its planing phase above SLR ≈ 2 without producing undesired waves or braking effect like any classic hull would do it.

Several towing experiments have been carried out in free water. The models used had a length of 2.65 metres. This made it possible to compare hulls having shapes according to those areas curves illustrated respectively in Figs. 3a and 3c. These experiments have been made by fairly calm water conditions. The results support the method described herein, which allows any hull to be designed and built to run from speed zero to speed like SLR = 3, maintaining the lateral displacement of water only by fluidity and visibly without producing waves. Moreover gliding effects have been observed before this speed has been reached. Simultaneously, a model with a classic hull was towed, and it was recorded that the water became displacing in a non-fluid way (i.e. generating a front waves system) above SLR = 0,74, and furthermore was developing significant brake effect upwards of SLR = 1,25. Water resistance measurements taken also demonstrate that hulls observing an areas curve similar to the areas curve illustrated in Fig. 3c and designed according to these recommendations offer virtually only a drag resistance and substantially no wave resistance.

Fig. 5 shows in summarized form the towing resistance curves from the experiments for three hulls having the same displacement. The "a" hull resistance curve R corresponds to the typical sailboat hull built according to the areas curve shown in Fig. "3a" with the waterlines as illustrated in Fig. 2. The "c" hull resistance curve corresponds to a sailboat hull built corresponding to the areas curve depicted in Fig. "3c" with waterlines according to Fig. 4. The "d" resistance curve corresponds to a typical semi-planing watercraft hull with a "deep V" entrance corresponding to the areas curve shown in Fig. 3d. Fig. 5 evidences that hulls designed according to the present invention produce greatly reduced resistance above SLR = 1.34 and thus need less power for obtaining the same speed. Alternatively, the hull according to the present invention allows significantly more speed to be attained when maintaining the existing power.

Moreover, in order to displace the water as smoothly as possible, it may be of further advantage to position the largest $A_x$ section at the aft most position, preferably at the transom (the aft-most section), and distribute very regularly the volumes of water dislocated laterally throughout the hull length.

By positioning the largest $A_x$ section at the aft most position, on the one hand the hull is not making waves, the impulse induced to the dislocated water being lower than the fluidity threshold. On the other hand its largest section $A_x$ may preferably be about 30% smaller than a classic sailboat hull having exactly the same tonnage, that being a considerable advantage since this hull will dislocate also 30% less water to sail an identical distance. To help understand this fact, imagine two big rectangular boxes advancing in a densely packed street, the first box being narrow, the second one three times broader. How many people will have to move to let passing each one? If for each meter made by the first box, 10 people have to move, it seems obvious that the broader box will need to displace 30 people to progress the same distance. Exactly as the width of the boxes moving, the volume of water to be displaced depends not on the "displacement" nor on the volume of a hull but mostly on its greater section $A_x$. This shows that traditionally shaped sailboat hulls, all having their $A_x$ section situated almost at two thirds of their overall length, will put in movement about 30 or 35% more water than any hulls designed with a $A_x$ section aft, despite having the same tonnage.

No doubt many other effective alternatives will occur to the skilled person. It will be understood that the invention is not limited to the described embodiments and encompasses modifications apparent to those skilled in the art lying within the spirit and scope of the claims appended hereto.

## Claims

1. A ballasted sailboat comprising a single hull, the hull comprising a bow and a transom, the hull having a fine shape allowing to delocalize water when travelling through it substantially by fluidity, thereby reducing wave-making based on calm water considerations, wherein the fine shape of the hull is **characterized by** an areas curve ($\Sigma$A), which represents areas of half cross sections of the hull below waterline, said areas being taken along a predetermined length wherein the predetermined length is at least two-thirds of the horizontal distance between the forward-most (FP) and aft-most (AP) perpendiculars to the waterline, at different subsequent cross sections, the distance between two subsequent cross sections being equal to d, wherein $\Delta$A corresponds to the difference between two values on the areas curve, and wherein the absolute value of the gradient DA/d corresponds substantially to:

$$\left| \frac{\Delta A}{d} \right| \leq 0.126 \, \text{m}.$$

2. A ballasted sailboat according to claim 1, wherein the absolute value of the gradient $\Delta A/d$ of the areas curve corresponds substantially to:

$$\left| \frac{\Delta A}{d} \right| \leq 0.115 \, \text{m}.$$

3. A ballasted sailboat according to any one of the preceding claims, wherein the predetermined length is substantially the horizontal distance between perpendiculars taken at the forward-most (FP) and aft-most (AP) points on the waterline.

4. A ballasted sailboat according to any one of the preceding claims, wherein the volume of appendages like keel or rudder is not taken in account in the calculation of the areas curve ($\Sigma$A).

5. A ballasted sailboat according to any one of the preceding claims, wherein the areas curve ($\Sigma$A) is that of a three-dimensional convex hull circumscribing the hull.

6. A ballasted sailboat according to any one of claims 1 to 4, wherein the areas curve ($\Sigma$A) is that obtained by the assumption that the stern sections shapes were filled.

7. A ballasted sailboat according to any one of claims 5 to 6, wherein the hull comprises lines acting as skirts in the real shapes.

8. A ballasted sailboat according to any one of the preceding claims, wherein the greatest immersed cross section (Ax) is almost at the transom

9. A ballasted sailboat according to any one of claims 1 to 7, wherein the greatest immersed cross section (Ax) is at the transom.

**Patentansprüche**

1. Mit Ballast geladenes Segelboot, umfassend einen einzigen Rumpf, wobei der Rumpf einen Bug und ein Heck aufweist, wobei der Rumpf ein Unterwasserschiff aufweist, das ermöglicht, das Wasser, im Wesentlichen durch Fluidität zu verdrängen, wenn er sich durch dieses bewegt, wodurch die Wellenbildung auf der Grundlage von Betrachtungen im ruhigen Wasser reduziert wird, wobei das Unterwasserschiff des Rumpfes **gekennzeichnet ist durch** eine Kurve der Flächen ($\Sigma$A), die die Flächen der Halbquerschnitte des Rumpfes unter der Wasserlinie darstellt, wobei die Flächen auf einer vorbestimmten Länge verwendet werden, wobei die vorbestimmte Länge mindestens zwei Drittel des horizontalen Abstands zwischen der vordersten (FP) und der hintersten (AP) Senkrechten mit Bezug auf die Wasserlinie auf der Ebene von verschiedenen aufeinander folgenden Querschnitten beträgt, wobei der Abstand zwischen zwei aufeinander folgenden Querschnitten gleich d ist, wobei $\Delta$A dem Unterschied zwischen zwei Werten auf der Kurve der Flächen entspricht, und wobei der absolute Wert des Gradienten $\Delta$A/d im Wesentlichen Folgendem entspricht:

$$\left|\frac{\Delta A}{d}\right| \leq 0{,}126 \, m$$

2. Mit Ballast geladenes Segelboot nach Anspruch 1, wobei der absolute Wert des Gradienten $\Delta A/d$ der Kurve der Flächen im Wesentlichen Folgendem entspricht:

$$\left|\frac{\Delta A}{d}\right| \leq 0{,}115 \, m$$

3. Mit Ballast geladenes Segelboot nach einem der vorhergehenden Ansprüche, wobei die vorbestimmte Länge im Wesentlichen der horizontale Abstand zwischen Senkrechten ist, die auf der Ebene des vordersten (FP) und hintersten (AP) Punkt der Wasserlinie verwendet werden.

4. Mit Ballast geladenes Segelboot nach einem der vorhergehenden Ansprüche, wobei das Volumen von Zusätzen wie z.B. dem Kiel oder dem Ruder bei der Berechnung der Kurve ($\Sigma$A) nicht berücksichtigt wird.

5. Mit Ballast geladenes Segelboot nach einem der vorhergehenden Ansprüche, wobei die Kurve der Flächen ($\Sigma$A) diejenige eines dreidimensionalen konvexen Rumpfes ist, der den Rumpf umschreibt.

6. Mit Ballast geladenes Segelboot nach einem der Ansprüche 1 bis 4, wobei die Kurve der Flächen ($\Sigma$A) diejenige ist, die durch die Annahme erhalten wird, dass die Formen der interen Abschnitte gefüllt werden.

**7.** Mit Ballast geladenes Segelboot nach einem der Ansprüche 5 bis 6, wobei der Rumpf Wasserlinien umfasst, die als Ummantelungen in den tatsächlichen Formen dienen.

**8.** Mit Ballast geladenes Segelboot nach einem der vorhergehenden Ansprüche, wobei sich der größte eingetauchte Querschnitt (Ax) fast am dem Niveau des Heckspiegels befindet.

**9.** Mit Ballast geladenes Segelboot nach einem der Ansprüche 1 bis 7, wobei sich der größte eingetauchte Querschnitt (Ax) am dem Niveau des Heckspiegels befindet.

**Revendications**

**1.** Bateau à voile lesté comprenant une coque simple, la coque comprenant une étrave et un tableau, la coque ayant des oeuvres vives permettant de délocaliser l'eau sensiblement par fluidité, lorsqu'elle se déplace à travers celle-ci, réduisant ainsi la génération de vagues sur la base de considérations d'eau calme, dans lequel les oeuvres vives de la coque sont **caractérisées par** une courbe des aires ($\Sigma A$), qui représente les aires des demi-sections transversales de la coque en dessous de la ligne de flottaison, lesdites aires étant considérées sur une longueur prédéterminée, la longueur prédéterminée représentant au moins deux tiers de la distance horizontale entre les perpendiculaires le plus en avant (FP) et le plus en arrière (AP) par rapport à la ligne de flottaison, au niveau de sections transversales consécutives différentes, la distance entre deux sections transversales consécutives étant égale à d, $\Delta A$ correspondant à la différence entre deux valeurs sur la courbe de aires et la valeur absolue du gradient $\Delta A/d$ correspondant sensiblement à :

$$\left|\frac{\Delta A}{d}\right| \leq 0{,}126\ m\,.$$

**2.** Bateau à voile lesté selon la revendication 1, dans lequel la valeur absolue du gradient $\Delta A/d$ de la courbe des aires correspond sensiblement à :

$$\left|\frac{\Delta A}{d}\right| \leq 0{,}115\ m\,.$$

**3.** Bateau à voile lesté selon l'une quelconque des revendications précédentes, dans lequel la longueur prédéterminée est sensiblement la distance horizontale entre les perpendiculaires prises au niveau des points le plus en avant (FP) et le plus en arrière (AP) sur la ligne de flottaison.

**4.** Bateau à voile lesté selon l'une quelconque des revendications précédentes, dans lequel le volume des appendices tels que la quille ou le gouvernail n'est pas pris en compte dans le calcul de la courbe des aires ($\Sigma A$).

**5.** Bateau à voile lesté selon l'une quelconque des revendications précédentes, dans lequel la courbe des aires ($\Sigma A$) est celle d'une coque convexe tridimensionnelle circonscrivant la coque.

**6.** Bateau à voile lesté selon l'une quelconque des revendications 1 à 4, dans lequel la courbe des aires ($\Sigma A$) est celle obtenue grâce à l'hypothèse selon laquelle les formes des sections arrières ont été remplies.

**7.** Bateau à voile lesté selon l'une quelconque des revendications 5 à 6, dans lequel la coque comprend des lignes d'eau faisant office de jupes dans les formes réelles.

**8.** Bateau à voile lesté selon l'une quelconque des revendications précédentes, dans lequel la section transversale immergée la plus grande (Ax) est pratiquement au niveau du tableau.

**9.** Bateau à voile lesté selon l'une quelconque des revendications 1 à 7, dans lequel la section transversale immergée la plus grande (Ax) est au niveau du tableau.

**Fig. 1a**

**Fig. 1b**

**Fig. 1c**

**Fig. 1d**

Fig. 2a

Fig. 2b

Fig. 2c

26

27

29

28

Ax

Ax

A (m² ft²)

Fig. 3a

Fig. 3b

Fig. 3c

Fig. 3d

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 19538520
- US 20020979595 A
- US 2005022713 A

### Non-patent literature cited in the description

- **TANIGUCHI TAMURA.** On a new method of correction for wind resistance relative to the analysis of speed trial results. *Proceedings of 11th ITTC,* 1966
- **WILLIAM FROUDE.** *The Papers of William Froude,* 1810-1879